# FASCICULE DE BREVET EUROPEEN

(11) **EP 3 899 346 B1**
(45) Date de publication et mention de la délivrance du brevet: **07.09.2022**
(21) Numéro de dépôt: 20706575.6
(22) Date de dépôt: 28.01.2020
(51) Int. Cl.: F16M 13/02, F16M 11/04

(54) **DISPOSITIF DE MAINTIEN AJUSTABLE D'UN OBJET DE FORME PARALLÉLÉPIPÉDIQUE RECTANGLE**
VERSTELLBARE VORRICHTUNG ZUM HALTEN EINES RECHTECKIGEN PARALLELEPIPEDFÖRMIGEN OBJEKTS
ADJUSTABLE DEVICE FOR HOLDING A RECTANGULAR PARALLELEPIPED-SHAPED OBJECT

(30) Priorité: 05.02.2019 FR 1901128
(43) Date de publication de la demande: 27.10.2021
(73) Titulaire: COMMISSARIAT À L'ÉNERGIE ATOMIQUE ET AUX ÉNERGIES ALTERNATIVES, 75015 Paris (FR)
(72) Inventeur: SELWA, Olivier, 33600 PESSAC (FR); BELLUZZO, Adrien, 33116 LE BARP Cedex (FR)
(74) Mandataire: Brevalex
(86) Numéro de dépôt international: PCT/FR2020/050123
(87) Numéro de publication internationale: WO 2020/161410

(56) Documents cités:
- WO-A1-2013/104741
- US-A1- 2009 090 839
- US-A1- 2013 240 693

## Description

### DOMAINE TECHNIQUE

De façon générale, la présente invention se rapporte au domaine des dispositifs de maintien d'objets de forme sensiblement parallélépipédique rectangle.

De façon préférentielle, l'invention s'applique au maintien d'éléments optiques dans le but d'effectuer des métrologies, notamment des métrologies d'endommagement laser, et plus spécifiquement des métrologies de type DMS (pour « Damage Mapping System » en anglais) avec éclairage par les tranches des éléments optiques.

Toutefois, l'invention n'est pas limitée à ce domaine technique. Elle peut encore être utilisée dans tout domaine technique où le maintien d'un objet de forme sensiblement parallélépipédique rectangle est important, notamment pour du supportage optique, par exemple sur des chaînes laser, pour le transport d'objets, tels que des tableaux, des objets précieux, du mobilier, des objets de décoration, entre autres.

L'invention propose ainsi un dispositif de maintien d'un objet de forme sensiblement parallélépipédique rectangle, ainsi qu'un ensemble comportant un tel dispositif et un tel objet.

### ÉTAT DE LA TECHNIQUE ANTÉRIEURE

Dans le domaine de la métrologie d'endommagement laser, et particulièrement de la métrologie de type DMS, il est nécessaire de pouvoir maintenir un élément optique en vue d'effectuer sa métrologie ; il est actuellement nécessaire d'avoir un cadre adapté aux dimensions de chaque élément optique, à savoir sa longueur, sa largeur et son épaisseur.

Ainsi, plusieurs générations de cadres de maintien d'optiques ont vu le jour depuis plusieurs années et ils sont tous réalisés pour un seul dimensionnement d'élément optique. Le document US2009090839 divulgue un dispositif de maintien similaire.

Or, certaines installations laser utilisent de nombreux composants optiques dont les caractéristiques dimensionnelles sont très variables.

Il s'avère donc nécessaire de concevoir, fabriquer et stocker de nombreux cadres adaptés à chaque dimension permettant d'effectuer ces métrologies. Ces opérations présentent de nombreux inconvénients; notamment en termes de temps de conception, de financement et d'espace de stockage. Il est à noter également qu'en cas d'absence de cadre adapté, la métrologie n'est pas envisageable.

Il existe ainsi un besoin pour concevoir un dispositif de maintien d'objet de forme sensiblement parallélépipédique rectangle qui puisse être utilisé avec des objets de dimensions variables.

### EXPOSÉ DE L'INVENTION

L'invention a pour but de remédier au moins partiellement aux besoins mentionnés précédemment et aux inconvénients relatifs aux réalisations de l'art antérieur.

L'invention a ainsi pour objet, selon l'un de ses aspects, un dispositif de maintien d'un objet de forme sensiblement parallélépipédique rectangle, caractérisé en ce qu'il comporte au moins quatre blocs de maintien destinés à venir respectivement au contact des quatre tranches de l'objet,
chaque bloc de maintien comportant :
- une partie de contact sur laquelle une des quatre tranches de l'objet est destinée à être en appui,
- un système de guidage linéaire permettant de lier les blocs de maintien entre eux par le biais de liaisons glissières,
le dispositif de maintien étant ainsi configuré pour être ajustable à la longueur et à la largeur de l'objet.

Par l'expression « quatre tranches de l'objet », on entend les quatre faces latérales de l'objet. En particulier, pour un objet de forme sensiblement parallélépipédique comprenant une face avant et une face arrière, les quatre tranches correspondent aux quatre faces latérales de l'objet.

Grâce à l'invention, il peut être possible de disposer d'un outillage permettant le maintien et la sécurisation de tout objet de forme sensiblement parallélépipédique rectangle. Le dispositif est en effet capable de s'adapter à des longueurs, des largeurs et des épaisseurs différentes selon le type d'objet à appréhender. Ainsi, l'invention permet d'obtenir : un gain en termes de coûts de conception puisqu'un seul dispositif est à développer; un gain en termes de production puisqu'un seul dispositif est à réaliser; un gain en termes de réactivité puisque tous les objets, notamment les éléments optiques, peuvent être maintenus, notamment mesurés ; un gain en termes d'espace de stockage ; un gain en termes d'adaptabilité ; et un gain en termes d'impact environnemental.

Le dispositif de maintien selon l'invention peut en outre comporter l'une ou plusieurs des caractéristiques suivantes prises isolément ou suivant toutes combinaisons techniques possibles.

Les liaisons glissières peuvent être de nombre, de morphologie, de taille et/ou de technologie différentes. Par exemple, elles peuvent présenter une forme en « L », en « T » et/ou en « boule ». Les liaisons glissières utilisées peuvent être de tout type connu, étant éventuellement obtenues à partir d'éléments du commerce.

Les liaisons glissières peuvent par exemple comprendre une liaison glissière assurée par un rail en forme de « T » par bloc de maintien et/ou une liaison glissière assurée par un ou plusieurs rails, par exemple, deux rails, en forme de « L », opposés l'un à l'autre, par bloc de maintien.

La partie de contact peut comporter deux portions coulissantes définissant entre elles un espace de positionnement d'une des quatre tranches de l'objet dont la largeur est définie par la distance entre les deux portions. La partie de contact peut de plus comporter un système de réglage de l'espace de positionnement pour être ajustable à l'épaisseur de l'objet.

Le système de réglage peut être actionné par le biais d'au moins une mollette de réglage. En outre, le système de réglage peut comporter des moyens de verrouillage de la largeur de l'espace de positionnement.

Chaque bloc de maintien peut être préférentiellement réalisé en métal, comportant notamment un corps central en métal. En variante, tout autre type de matériau peut être utilisé en fonction des contraintes subies et des avantages attendus. En particulier, chaque bloc de maintien, et notamment chaque corps central, peut être réalisé en un seul matériau ou en une pluralité de matériaux.

Chaque bloc de maintien peut comporter une face interne comportant la partie de contact, une face externe, opposée à la face interne, une première face latérale et une deuxième face latérale, opposée à la première face latérale. De plus, le système de guidage linéaire peut comporter des rails de guidage linéaire disposés sur la face interne et sur au moins l'une des première et deuxième faces latérales, notamment les deux.

Le système de guidage linéaire peut comporter des rails de guidage linéaire sur la face interne de type femelle, respectivement mâle. Le système de guidage linéaire peut de plus comporter des rails de guidage linéaire de type mâle, respectivement femelle, sur au moins l'une des première et deuxième faces latérales.

En outre, le système de guidage linéaire peut comporter des rails de guidage linéaire sur la face interne de type femelle, des rails de guidage linéaire de type mâle sur la première face latérale, et des rails de guidage linéaire de type femelle sur la deuxième face latérale.

Par ailleurs, chaque bloc de maintien peut comporter des moyens d'éclairage de l'objet, notamment des moyens d'éclairage d'une tranche de l'objet, notamment une barre de diodes électroluminescentes de type LED.

La partie de contact peut comporter un espace d'éclairage permettant le passage de lumière des moyens d'éclairage de l'objet.

Il est à noter que l'utilisation d'une liaison glissière assurée par deux rails en forme de « L » peut avantageusement permettre de prévoir un espace d'éclairage pour la partie de contact permettant le passage de lumière des moyens d'éclairage de l'objet.

En outre, l'invention a encore pour objet, selon un autre de ses aspects, un ensemble, caractérisé en ce qu'il comporte :
- un dispositif de maintien tel que défini précédemment,
- un objet de forme sensiblement parallélépipédique rectangle maintenu entre lesdits au moins quatre blocs de maintien du dispositif de maintien.

Cet ensemble peut en outre comporter un système de verrouillage en position des blocs de maintien. Un tel système peut permettre d'éviter toute ouverture intenpestive.

### BRÈVE DESCRIPTION DES DESSINS

L'invention pourra être mieux comprise à la lecture de la description détaillée qui va suivre, d'exemples de mise en œuvre non limitatifs de celle-ci, ainsi qu'à l'examen des figures, schématiques et partielles, du dessin annexé, sur lequel :
[Fig. 1] illustre, selon une vue en perspective, la face interne d'un bloc de maintien d'un exemple de dispositif de maintien conforme à l'invention,
[Fig. 2] illustre, selon une vue en perspective, la face externe du bloc de maintien de la figure 1, et
[Fig. 3], [Fig. 4], [Fig. 5] et [Fig. 6] illustrent, selon des vues de face, des exemples d'objets de dimensions variables maintenus par le dispositif de maintien conforme à l'invention.

Dans l'ensemble de ces figures, des références identiques peuvent désigner des éléments identiques ou analogues.

De plus, les différentes parties représentées sur les figures ne le sont pas nécessairement selon une échelle uniforme, pour rendre les figures plus lisibles.

### EXPOSÉ DÉTAILLÉ DE MODES DE RÉALISATION PARTICULIERS

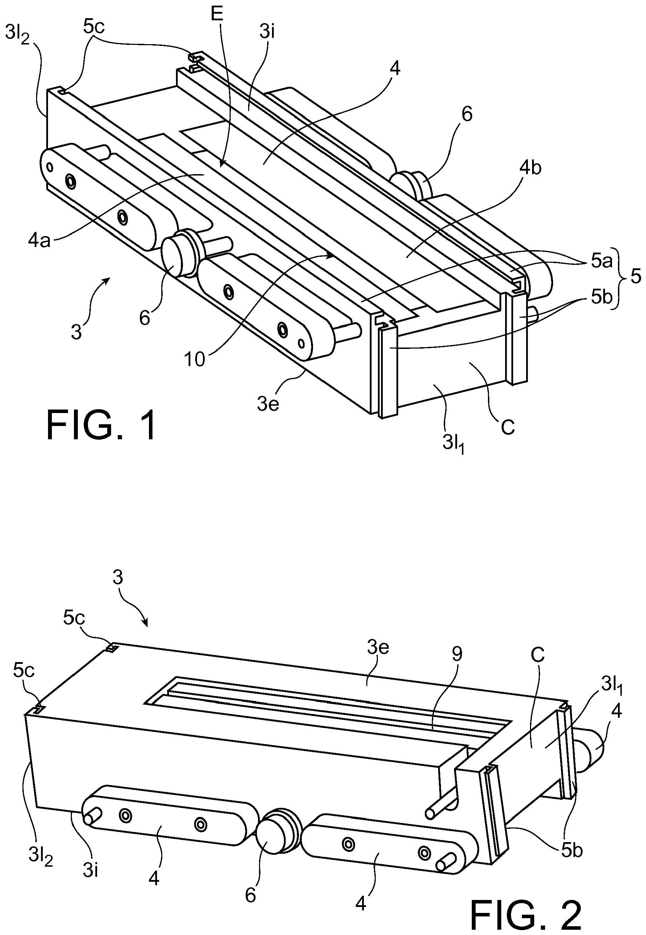

En référence aux figures 1 et 2, on a illustré respectivement, selon des vues en perspective, la face interne 3i et la face externe 3e d'un bloc de maintien 3 d'un dispositif de maintien 1 conforme à l'invention.

Le dispositif de maintien 1 conforme à l'invention est tout particulièrement, mais non exclusivement, adapté pour la réalisation de métrologies d'endommagement laser, et plus spécifiquement de métrologies de type DMS, avec éclairage par les tranches d'objets 2 sous forme d'éléments optiques.

Le dispositif de maintien 1 conforme à l'invention permet de disposer d'un cadre unique assurant le maintien de n'importe quel élément optique dont les dimensions sont compatibles avec les dimensions maximales prévues pour le dispositif 1.

De façon avantageuse, notamment pour la réduction du temps et des coûts de fabrication et de conception, le dispositif de maintien 1 peut comporter quatre blocs de maintien 3 tels que celui illustré aux figures 1 et 2.

Ainsi, chaque bloc de maintien 3 peut comporter un corps central C en métal ou autre matériau, voire en multi matériaux, et une partie de contact 4 sur laquelle une des quatre tranches de l'objet 2 est destinée à être en appui. De plus, chaque bloc de maintien 3 comporte un système de guidage linéaire 5 permettant de lier les blocs de maintien entre eux par le biais de liaisons glissières. Les liaisons glissières peuvent être de nombre, de morphologie, de taille et/ou de technologie différentes. Par exemple, elles peuvent présenter une forme en « L », en « T » et/ou en « boule ».

Plus précisément, la partie de contact 4, visible sur la figure 1, comporte deux portions 4a et 4b coulissantes pour se rapprocher et/ou s'éloigner l'une de l'autre. Elles définissent entre elles un espace de positionnement E d'une des quatre tranches de l'objet 2 dans lequel la tranche est au contact de la partie de contact 4. L'espace de positionnement E a une largeur définie par la distance entre les deux portions 4a et 4b.

Avantageusement, la partie de contact 4 comporte un système de réglage de l'espace de positionnement E pour être ajustable à l'épaisseur de l'objet 2. Ce système de réglage est actionné par le biais de deux mollettes de réglage 6, de part et d'autre de la partie de contact 4.

Afin de sécuriser le positionnement de l'objet 2, le système de réglage comporte des moyens de verrouillage de la largeur de l'espace de positionnement E ou encore des moyens d'anti-desserrage.

Par ailleurs, afin de permettre un éclairage par la tranche des objets 2 sous forme d'éléments optiques, chaque bloc de maintien 3 comporte des moyens d'éclairage 9 des tranches de l'objet 2. Ces moyens d'éclairage 9 sont par exemple sous la forme d'une barre de diodes électroluminescentes de type LED 9, comme représenté sur la figure 2. De plus, comme visible sur la figure 1, la partie de contact 4 comporte un espace d'éclairage 10 permettant le passage de lumière des moyens d'éclairage 9 de l'objet 2.

En outre, comme visible sur les figures 1 et 2, chaque bloc de maintien 3 comporte une face interne 3i comportant la partie de contact 4, une face externe 3e, opposée à la face interne 3i, une première face latérale 3l₁ et une deuxième face latérale 3b, opposée à la première face latérale 3l₁. Le système de guidage linéaire 5 peut alors par exemple comporter des rails de guidage linéaire 5a, 5b, 5c disposés sur la face interne 3i et sur au moins l'une des première et deuxième faces latérales 3l₁, 3l₂, notamment les deux.

Par exemple, dans le cas de l'exemple des figures 1 et 2, le système de guidage linéaire 5 comporte des rails de guidage linéaire 5a sur la face interne 3i de type femelle, des rails de guidage linéaire 5b de type mâle sur la première face latérale 3l₁, et des rails de guidage linéaire 5c de type femelle sur la deuxième face latérale 3l₂. Les rails de guidage de type mâle d'un bloc de maintien sont destinés à coopérer avec les rails de guidage de type femelle d'un autre bloc de maintien pour permettre l'obtention de liaisons glissières entre les blocs de maintien. Ainsi, par un système de guidage par liaisons glissières, les quatre blocs de maintien peuvent s'assembler entre eux et former un cadre ajustable aux dimensions de l'objet 2.

Un exemple d'un tel dispositif de maintien 1 a été conçu avec des plages possibles de mesures pour l'épaisseur de l'objet comprises entre 5 et 34 mm, pour la longueur de l'objet comprises entre 0 et 160 mm, et pour la largeur de l'objet comprises entre 0 et 160 mm, mais les dimensions de ce dispositif expérimental peuvent évoluer en fonction des besoins.

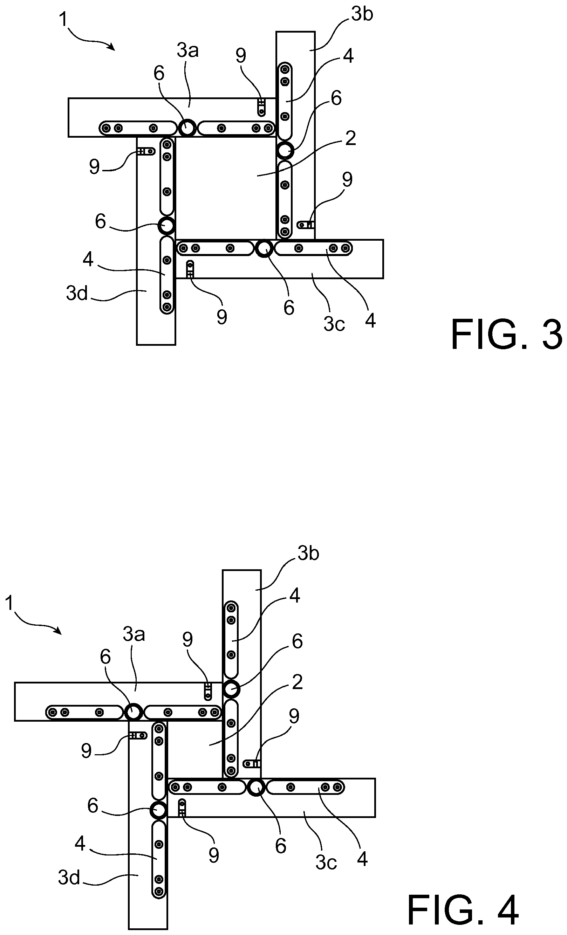

Les figures 3 à 6 illustrent ainsi, en vue de face, le positionnement de l'objet 2 dans le dispositif de maintien 1 par la mise en place de quatre blocs de maintien 3a, 3b, 3c et 3d autour de l'objet 2, les quatre blocs étant liés entre eux par le biais des liaisons glissières formées par les systèmes de guidage linéaire 5.

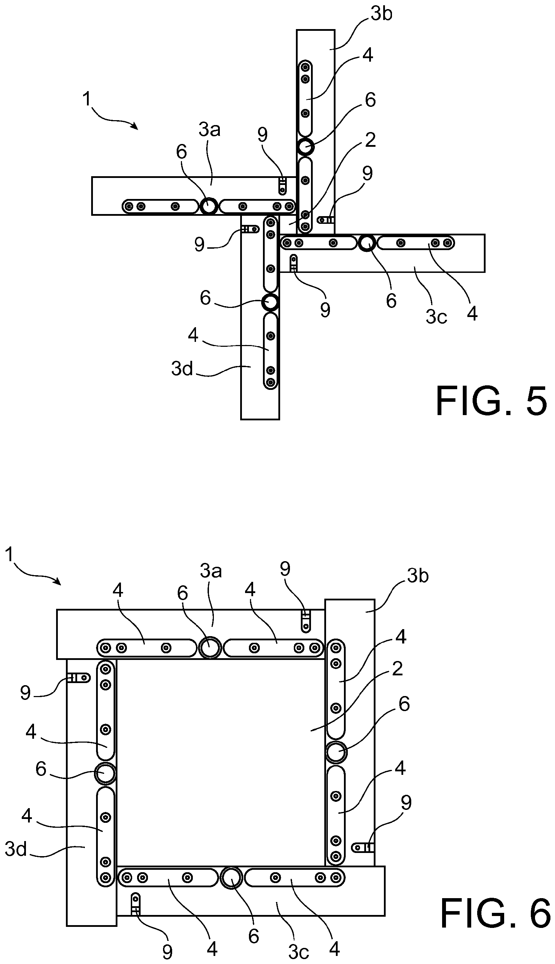

Sur la figure 3, l'objet 2 sous forme d'élément optique a une dimension largeur x longueur de 100 mm x 100 mm. Sur la figure 4, l'objet 2 sous forme d'élément optique a une dimension largeur x longueur de 50 mm x 50 mm. Sur la figure 5, l'objet 2 sous forme d'élément optique a une dimension largeur x longueur de quelques millimètres x quelques millimètres. Enfin, sur la figure 6, l'objet 2 sous forme d'élément optique a une dimension largeur x longueur de 160 mm x 160 mm, ce qui correspond au débattement maximal du dispositif expérimental 1 compte-tenu de la plage possible de mesures choisie.

Ainsi, la mise en œuvre de quatre liaisons glissières permet de modifier à volonté la taille du rectangle ainsi formé et de s'adapter à différentes tailles d'objets. Le dispositif permet également un réglage de l'épaisseur de maintien en fonction de l'épaisseur de l'objet et un éclairage de celui-ci par la tranche.

Bien entendu, l'invention n'est pas limitée aux exemples de réalisation qui viennent d'être décrits. Diverses modifications peuvent y être apportées par l'homme du métier, notamment pour prendre en compte des contraintes dimensionnelles et/ou géométriques différentes.

En particulier, un ou plusieurs des blocs de maintien 3a, 3b, 3c, 3d peuvent être modifiés, de manière non-exhaustive, pour assurer des fonctions secondaires. Ainsi, chaque bloc de maintien 3a, 3b, 3c, 3d peut être constitué de plusieurs sous-ensembles démontables, éventuellement de longueurs différentes, disposant notamment d'interfaces de fixation et/ou de mise en œuvre.

Le dispositif 1 peut par exemple être mis en œuvre pour le transport d'objets. Dans ce cas, tout ou partie des blocs de maintien 3a, 3b, 3c, 3d peut comporter des moyens de déplacement, par exemple une ou plusieurs roulettes fixée(s) au(x) bloc(s).

En outre, chaque bloc de maintien 3a, 3b, 3c, 3d peut comporter un rebord d'appui de la face avant ou de la face arrière de l'objet 2 permettant la réception de l'objet 2 sur le dispositif 1.

## Revendications

1. Dispositif (1) de maintien d'un objet (2) de forme sensiblement parallélépipédique rectangle, **caractérisé en ce qu'**il comporte au moins quatre blocs de maintien (3, 3a, 3b, 3c, 3d) destinés à venir respectivement au contact des quatre tranches de l'objet (2),
chaque bloc de maintien (3, 3a, 3b, 3c, 3d) comportant :
- une partie de contact (4) sur laquelle une des quatre tranches de l'objet (2) est destinée à être en appui,
- un système de guidage linéaire (5) permettant de lier les blocs de maintien (3, 3a, 3b, 3c, 3d) entre eux par le biais de liaisons glissières,
le dispositif (1) de maintien étant ainsi configuré pour être ajustable à la longueur et à la largeur de l'objet (2) **caractérisée en ce que** chaque bloc de maintien (3, 3a, 3b, 3c, 3d) comporte une face interne (3i) comportant
la partie de contact (4), une face externe (3e), opposée à la face interne (3i), une première face latérale (3l₁) et une deuxième face latérale (3l₂), opposée à la première face latérale (3l₁), etle système de guidage linéaire (5) comportant des rails de guidage linéaire (5a, 5b, 5c) disposés sur la face interne (3i) et sur au moins l'une des première et deuxième faces latérales (3l₁, 3l₂),
le système de guidage linéaire (5) comportant des rails de guidage linéaire (5a) sur la face interne (3i) de type femelle, respectivement mâle, et le système de guidage linéaire (5) comportant des rails de guidage linéaire (5b, 5c) de type mâle, respectivement femelle, sur au moins l'une des première et deuxième faces latérales (3l₁, 3l₂).

2. Dispositif selon la revendication 1, **caractérisé en ce que** la partie de contact (4) comporte deux portions (4a, 4b) coulissantes définissant entre elles un espace de positionnement (E) d'une des quatre tranches de l'objet (2) dont la largeur est définie par la distance entre les deux portions (4a, 4b), la partie de contact (4) comportant de plus un système de réglage de l'espace de positionnement (E) pour être ajustable à l'épaisseur de l'objet (2).

3. Dispositif selon la revendication 2, **caractérisé en ce que** le système de réglage est actionné par le biais d'au moins une mollette de réglage (6).

4. Dispositif selon la revendication 2 ou 3, **caractérisé en ce que** le système de réglage comporte des moyens de verrouillage de la largeur de l'espace de positionnement (E).

5. Dispositif selon l'une quelconque des revendications précédentes, **caractérisé en ce que** le système de guidage linéaire (5) comporte des rails de guidage linéaire (5a) sur la face interne (3i) de type femelle, des rails de guidage linéaire (5b) de type mâle sur la première face latérale (3l₁), et des rails de guidage linéaire (5c) de type femelle sur la deuxième face latérale (3l₂).

6. Dispositif selon l'une quelconque des revendications précédentes, **caractérisé en ce que** chaque bloc de maintien (3, 3a, 3b, 3c, 3d) comporte des moyens d'éclairage (9) de l'objet (2), notamment des moyens d'éclairage (9) d'une tranche de l'objet (2), notamment une barre de diodes électroluminescentes de type LED (9).

7. Dispositif selon la revendication 6, **caractérisé en ce que** la partie de contact (4) comporte un espace d'éclairage (10) permettant le passage de lumière des moyens d'éclairage (9) de l'objet (2).

8. Ensemble, **caractérisé en ce qu'**il comporte :
- un dispositif de maintien (1) selon l'une quelconque des revendications précédentes,
- un objet (2) de forme sensiblement parallélépipédique rectangle maintenu entre lesdits au moins quatre blocs de maintien (3, 3a, 3b, 3c, 3d) du dispositif de maintien (1).

9. Ensemble selon la revendication 8, **caractérisé en ce qu'**il comporte en outre un système de verrouillage en position des blocs de maintien (3, 3a, 3b, 3c, 3d).

## Patentansprüche

1. Vorrichtung (1) zum Halten eines Objekts (2) in einer im Wesentlichen rechteckigen Quaderform, **dadurch gekennzeichnet, dass** sie mindestens vier Halteblöcke (3, 3a, 3b, 3c, 3d) beinhaltet, die dazu bestimmt sind, jeweils in Kontakt mit den vier Rändern des Objekts (2) zu gelangen,
wobei jeder Halteblock (3, 3a, 3b, 3c, 3d) beinhaltet:
- einen Kontaktteil (4), an den einer der vier Ränder des Objekts (2) dazu bestimmt ist, sich anzulegen,
- ein Linearführungssystem (5), das es ermöglicht, die Halteblöcke (3, 3a, 3b, 3c, 3d) über Gleitverbindungen miteinander zu verbinden,
wobei die Vorrichtung (1) zum Halten derart konfiguriert ist, um an die Länge und an die Breite des Objekts (2) anpassbar zu sein, **dadurch gekennzeichnet, dass** jeder Halteblock (3, 3a, 3b, 3c, 3d) eine Innenfläche (3i), die den Kontaktteil (4) beinhaltet, eine Außenfläche (3e), gegenüber der Innenfläche (3i), eine erste Seitenfläche (3l₁) und eine zweite Seitenfläche (3l₂) gegenüber der ersten Seitenfläche (3l₁) beinhaltet, und wobei das Linearführungssystem (5) Linearführungsschienen (5a, 5b, 5c) beinhaltet, die an der Innenfläche (3i) und an mindestens einer von der ersten und zweiten Seitenfläche (3l₁, 3l₂) angeordnet sind,
wobei das Linearführungssystem (5) Linearführungsschienen (5a) an der Innenfläche (3i) in der Art einer Buchse, beziehungsweise eines Steckers beinhaltet, und das Linearführungssystem (5) Linearführungsschienen (5b, 5c) in der Art eines Steckers, beziehungsweise einer Buchse auf mindestens einer der ersten und zweiten Seitenfläche (3l₁, 3l₂) beinhaltet.

2. Vorrichtung nach Anspruch 1, **dadurch gekennzeichnet, dass** der Kontaktteil (4) zwei Gleitabschnitte (4a, 4b) beinhaltet, die zwischen sich einen Positionierungsraum (E) für einen der vier Ränder des Objekts (2) definieren, deren Breite durch den Abstand zwischen den beiden Abschnitten (4a, 4b) definiert ist, wobei der Kontaktteil (4) weiter ein Einstellsystem für den Positionierungsraum (E) beinhaltet, um an die Dicke des Objekts (2) anpassbar zu sein.

3. Vorrichtung nach Anspruch 2, **dadurch gekennzeichnet, dass** das Einstellsystem anhand mindestens eines Einstellrades (6) betätigt wird.

4. Vorrichtung nach Anspruch 2 oder 3, **dadurch gekennzeichnet, dass** das Einstellsystem Verriegelungsmittel in der Breite des Positionierungsraumes (E) beinhaltet.

5. Vorrichtung nach einem der vorstehenden Ansprüche, **dadurch gekennzeichnet, dass** das Linearführungssystem (5) Linearführungsschienen (5a) an der Innenfläche (3i) in der Art einer Buchse, Linearführungsschienen (5b) in der Art eines Steckers an der ersten Seitenfläche (3l₁), und Linearführungsschienen (5c) in der Art einer Buchse an der zweiten Seitenfläche (3l₂) beinhaltet.

6. Vorrichtung nach einem der vorstehenden Ansprüche, **dadurch gekennzeichnet, dass** jeder Halteblock (3, 3a, 3b, 3c, 3d) Mittel zum Beleuchten (9) des Objekts (2), insbesondere Mittel zum Beleuchten (9) eines Randes des Objekts (2), insbesondere einen Balken mit elektrolumineszierenden Dioden in der Art von LED (9) beinhaltet.

7. Vorrichtung nach Anspruch 6, **dadurch gekennzeichnet, dass** der Kontaktteil (4) einen Beleuchtungsraum (10) beinhaltet, der den Lichtdurchgang aus den Mitteln zum Beleuchten (9) des Objekts (2) ermöglicht.

8. Einheit, **dadurch gekennzeichnet, dass** sie beinhaltet:
- eine Vorrichtung (1) zum Halten nach einem der vorstehenden Ansprüche,
- ein Objekt (2) in einer im Wesentlichen rechteckigen Quaderform, das zwischen den mindestens vier Halteblöcken (3, 3a, 3b, 3c, 3d) der Vorrichtung (1) zum Halten festgehalten wird.

9. Einheit nach Anspruch 8, **dadurch gekennzeichnet, dass** sie weiter ein System zur Positionsverriegelung der Halteblöcke (3, 3a, 3b, 3c, 3d) beinhaltet.

## Claims

1. A device (1) for holding an object (2) of substantially rectangular parallelepiped shape, **characterised in that** it includes at least four holding blocks (3, 3a, 3b, 3c, 3d) intended to respectively come into contact with the four edges of the object (2),
each holding block (3, 3a, 3b, 3c, 3d) including:
- a contact portion (4) on which one of the four edges of the object (2) is intended to bear,
- a linear guide system (5) allowing linking the holding blocks (3, 3a, 3b, 3c, 3d) to each other by means of sliding joints,
the holding device (1) being thus configured to be adjustable to the length and width of the object (2) **characterised in that** each holding block (3, 3a, 3b, 3c, 3d) includes an inner face (3i) including the contact portion (4), an outer face (3e), opposite to the inner face (3i), a first lateral face (3l₁) and a second lateral face (3l₂), opposite the first lateral face (3l₁), and the linear guide system (5) including linear guide rails (5a, 5b, 5c) disposed on the inner face (3i) and on at least one of the first and second lateral faces (3l₁, 3l₂),
the linear guide system (5) including linear guide rails (5a) on the inner face (3i) of the female, respectively male, type, and the linear guide system (5) including linear guide rails (5b, 5c) of the male, respectively female, type, on at least one of the first and second lateral faces (3l₁, 3l₂).

2. The device according to claim 1, **characterised in that** the contact portion (4) includes two sliding portions (4a, 4b) defining, therebetween, a positioning space (E) of one of the four edges of the object (2) whose width is defined by the distance between the two portions (4a, 4b), the contact portion (4) further including a system for adjusting the positioning space (E) to be adjustable to the thickness of the object (2).

3. The device according to claim 2, **characterised in that** the adjustment system is actuated by means of at least one adjustment knob (6).

4. The device according to claim 2 or 3, **characterised in that** the adjustment system includes means for locking the width of the positioning space (E).

5. The device according to any one of the preceding claims, **characterised in that** the linear guide system (5) includes linear guide rails (5a) on the inner face (3i) of the female type, linear guide rails (5b) of the male type on the first lateral face (3l₁), and linear guide rails (5c) of the female type on the second lateral face (3l₂).

6. The device according to any one of the preceding claims, **characterised in that** each holding block (3, 3a, 3b, 3c, 3d) includes means (9) for lighting the object (2), in particular means (9) for lighting an edge of the object (2), in particular a bar of light-emitting diodes of the LED type (9).

7. The device according to claim 6, **characterised in that** the contact portion (4) includes a lighting space (10) allowing the passage of light from the means (9) for lighting the object (2).

8. An assembly, **characterised in that** it includes:
- a holding device (1) according to any one of the preceding claims,
- an object (2) of substantially rectangular parallelepiped shape held between said at least four holding blocks (3, 3a, 3b, 3c, 3d) of the holding device (1).

9. The assembly according to claim 8, **characterised in that** it further includes a system for locking in position the holding blocks (3, 3a, 3b, 3c, 3d).
